# EUROPEAN PATENT APPLICATION

(11) **EP 4 810 152 A1**
(43) Date of publication of application: **23.09.2026**
(21) Application number: 24903567.6
(22) Date of filing: 03.12.2024
(51) Int. Cl.: B01J 20/22, B01D 53/14, B01J 20/26

(54) **ADSORPTION MEMBER AND CARBON DIOXIDE RECOVERY SYSTEM**

(30) Priority: 15.12.2023 JP 2023212465
(71) Applicant: DAIKIN INDUSTRIES, LTD., Osaka-shi, Osaka 530-0001 (JP)
(72) Inventor: MATSUMURA Naoki, Osaka-shi, Osaka 530-0001 (JP); KIKUCHI Yoshimasa, Osaka-shi, Osaka 530-0001 (JP); FURUSHO Kazuhiro, Osaka-shi, Osaka 530-0001 (JP)
(74) Representative: Hoffmann Eitle
(86) International application number: PCT/JP2024/042750
(87) International publication number: WO 2025/126910

(57) **Abstract**

An adsorption member (50) includes a base member (B) having a plurality of holes (56) through which air flows, and an adsorbent (60) that is carried on the base member (B) and adsorbs carbon dioxide in air. The adsorbent (60) contains an amine-based substance and an ionic liquid.

## Description

### Technical Field

The present disclosure relates to an adsorption member and a carbon dioxide recovery system.

### Background Art

A system for recovering carbon dioxide in the air is known. The carbon dioxide recovery system described in Patent Literature 1 includes an adsorption plate carrying an adsorbent and a circulation pipe that heats the adsorption plate. Carbon dioxide in the air is adsorbed by the adsorbent. A heating medium flowing through the circulation pipe heats and regenerates the adsorbent on the adsorption plate. Carbon dioxide desorbed from the adsorbent is transported by a pump and is stored.

### Citation List

### Patent Literature

PTL 1: Japanese Unexamined Patent Application Publication No. 2023-13169

### Summary of Invention

### Technical Problem

A temperature needed to regenerate an adsorbent that adsorbs carbon dioxide is, for example, approximately 80°C to 100°C. Therefore, in a case where a temperature for heating an adsorbent is low, there is a problem that the adsorbent cannot be sufficiently regenerated.

An object of the present disclosure is to lower a temperature needed to regenerate an adsorbent that adsorbs carbon dioxide.

### Solution to Problem

A first aspect relates to an adsorption member (50). The adsorption member (50) includes a base member (B) having a plurality of holes (56) through which air flows, and an adsorbent (60) that is carried on the base member (B) and adsorbs carbon dioxide in air. The adsorbent (60) contains an amine-based substance and an ionic liquid.

According to the first aspect, the adsorbent (60) contains the ionic liquid, and therefore a temperature needed to regenerate the adsorbent (60) can be lowered.

In the first aspect, a second aspect is arranged such that a weight ratio of the ionic liquid to the amine-based substance is 1/3 or less.

In a case where the weight ratio of the ionic liquid is too high, the temperature needed to regenerate the adsorbent (60) is too low, and this temperature is close to a normal outdoor air temperature. As a result, there is a possibility that the adsorption capability of the adsorbent (60) decreases or carbon dioxide is desorbed from the adsorbent (60) at an unintended timing. On the other hand, according to the second aspect, the weight ratio of the ionic liquid to the amine-based substance is 1/3 or less, and it is therefore possible to suppress occurrence of a situation where the temperature needed to regenerate the adsorption member (50) is close to the normal outdoor air temperature, and the above problem can be overcome.

In the first or second aspect, a third aspect is arranged such that the weight ratio of the ionic liquid to the amine-based substance is 1/6 or more.

In a case where the weight ratio of the ionic liquid is too low, the temperature needed to regenerate the adsorbent (60) cannot be sufficiently lowered. On the other hand, according to the third aspect, the weight ratio of the ionic liquid is 1/6 or more, and therefore the temperature needed to regenerate the adsorbent (60) can be made lower than a normal temperature (e.g., 80°C to 100°C).

A fourth aspect is a carbon dioxide recovery system including the adsorption member (50) according to any one of the first to third aspects.

In the fourth aspect, a fifth aspect further includes a heating device (10) that heats the adsorption member (50) in a range of 50°C or more and 70°C or less.

According to the fifth aspect, the temperature for heating the adsorption member (50) by the heating device is in a range of 50°C or more and 70°C or less, which is lower than the normal temperature. In this respect, the temperature needed to regenerate the adsorption member (50) decreases due to the presence of the ionic liquid. Therefore, even in a case where the temperature range in which the adsorption member (50) is heated by the heating device (10) is relatively low, the adsorbent (60) can be regenerated.

In the fifth aspect, a sixth aspect is arranged such that the heating device (10) is a refrigeration cycle device that includes a compressor (13), a radiator (41), a decompression mechanism (14), and an evaporator (15) and heats the adsorption member (50) by heat radiated from the radiator (41).

According to the sixth aspect, the refrigeration cycle device (10) heats the adsorption member (50) in a range of 50°C or more and 70°C or less. In a case where the refrigeration cycle device (10) is a heat source for the adsorbent (60), a coefficient of performance (COP) of the refrigeration cycle device (10) tends to decrease in a case where the temperature needed to regenerate the adsorbent (60) is a normal temperature (e.g., 80°C to 100°C). In this respect, the temperature needed to regenerate the adsorption member (50) decreases due to the presence of the ionic liquid. This makes it possible to regenerate the adsorbent (60) while suppressing a decrease in COP of the refrigeration cycle device (10).

### Brief Description of Drawings

[Fig. 1] Fig. 1 is a configuration diagram of a whole carbon dioxide recovery system.
[Fig. 2] Fig. 2 is an enlarged configuration diagram schematically illustrating a substantial part of an adsorption member.

### Description of Embodiments

Embodiments of the present disclosure are described in detail below with reference to the drawings. Note that the present disclosure is not limited to the embodiments below and can be changed in various ways without departing from the technical idea of the present disclosure. The drawings are for conceptually describing the present disclosure, and therefore dimensions, ratios, and numbers may be exaggerated or simplified as necessary to facilitate understanding.

### (1) Overall Configuration

An embodiment of the present disclosure is a carbon dioxide recovery system (1). The carbon dioxide recovery system (1) of the present example recovers carbon dioxide in atmosphere, in other words, in outdoor air. The carbon dioxide recovery system (1) of the present example constitutes a Direct Air Capture (DAC) system that directly separates and recovers carbon dioxide from atmosphere.

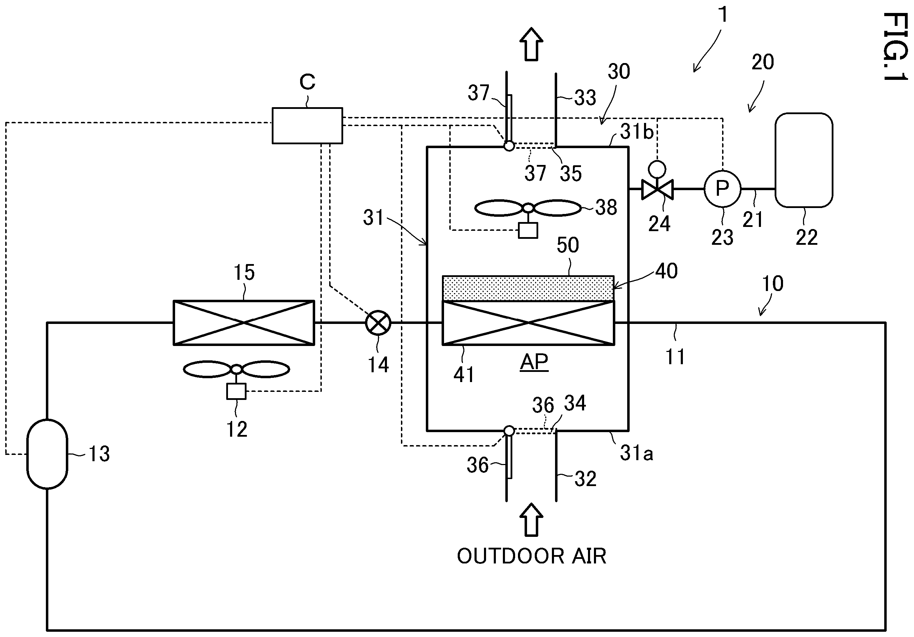

As illustrated in Fig. 1, the carbon dioxide recovery system (1) includes a refrigeration cycle device (10), an adsorption device (30) including an adsorption member (50), a recovery unit (20), and a controller (C). The refrigeration cycle device (10) is a heating device that heats the adsorption member (50). The recovery unit (20) is a device for recovering carbon dioxide desorbed from the adsorption member (50). The controller (C) controls each device of the carbon dioxide recovery system (1).

### (2) Refrigeration Cycle Device

The refrigeration cycle device (10) includes a refrigerant circuit (11) that performs a refrigeration cycle and a first fan (12). The refrigerant circuit (11) is filled with a refrigerant. The refrigerant circuit (11) includes a compressor (13), a first heat exchanger (41), an expansion valve (14), and a second heat exchanger (15). The compressor (13) compresses the refrigerant and discharges the compressed refrigerant. The compressor (13) is configured such that the number of revolutions is variable. The first heat exchanger (41) constitutes a radiator (condenser). The first heat exchanger (41) is provided in the adsorption device (30). The first heat exchanger (41) causes the refrigerant and the adsorption member (50) to exchange heat with each other, and thus heats the adsorption member (50). The expansion valve (14) constitutes a decompression mechanism that decompresses the refrigerant. For example, the expansion valve (14) is constituted by an electronic expansion valve whose opening degree is variable. The second heat exchanger (15) is an air heat exchanger placed outdoors. The first fan (12) is disposed in the vicinity of the second heat exchanger (15). The second heat exchanger (15) causes the refrigerant and outdoor air blown by the first fan (12) to exchange heat with each other.

### (3) Adsorption Device

The adsorption device (30) includes a casing (31), an inflow duct (32), and an outflow duct (33).

The casing (31) is hollow and forms an air flow path (AP) through which air flows. The casing (31) includes a first plate (31a) and a second plate (31b). The first plate (31a) and the second plate (31b) face each other. In the present example, the first plate (31a) is located on a lower side of the casing (31), and the second plate (31b) is located on an upper side of the casing (31).

The casing (31) has an inflow port (34) through which outdoor air flows into the air flow path (AP) and an outflow port (35) through which air in the air flow path (AP) flows out. The inflow port (34) is provided in the first plate (31a). The outflow port (35) is provided in the second plate (31b). The air flow path (AP) extends from the inflow port (34) to the outflow port (35).

The inflow duct (32) is connected to the inflow port (34). The inflow duct (32) allows an outdoor space and the inflow port (34) to communicate with each other. A first damper (36) is provided in the inflow duct (32). The first damper (36) is switched between an opened state (a state indicated by the solid line in Fig. 1) in which the inflow port (34) serving as an inflow portion of the air flow path (AP) is opened and a closed state (a state indicated by the broken line in Fig. 1) in which the inflow port (34) is closed.

The outflow duct (33) is connected to the outflow port (35). The outflow duct (33) allows the outflow port (35) and the outdoor space to communicate with each other. A second damper (37) is provided in the outflow duct (33). The second damper (37) is switched between an opened state (a state indicated by the solid line in Fig. 1) in which the outflow port (35) serving as an outflow portion of the air flow path (AP) is opened and a closed state (a state indicated by the broken line in Fig. 1) in which the outflow port (35) is closed.

The adsorption device (30) includes an adsorption unit (40) and a second fan (38). The adsorption unit (40) and the second fan (38) are disposed in the air flow path (AP). In the present example, the second fan (38) is disposed on a downstream side of air flow relative to the adsorption unit (40). The second fan (38) transports air in the air flow path (AP).

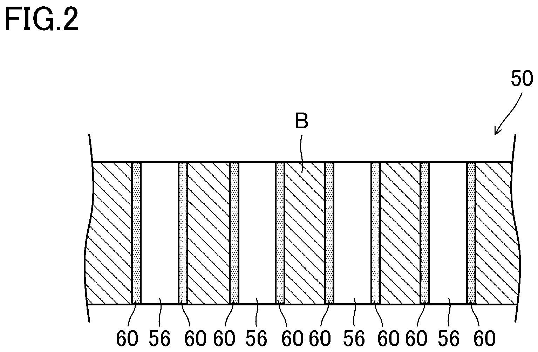

The adsorption unit (40) includes the first heat exchanger (41) and the adsorption member (50). The adsorption member (50) is attached to the first heat exchanger (41) to constitute the adsorption unit (40). As schematically illustrated in Fig. 2, the adsorption member (50) includes a base member (B) and an adsorbent (B) carried on the base member (B). The base member (B) has a plurality of holes (56) through which air flows. The adsorbent (60) is carried on inner surfaces of the plurality of holes (56). The adsorbent (60) may be carried on an outer surface of the base member (B).

The adsorbent (60) has a property of adsorbing carbon dioxide. Strictly, as a temperature of the adsorbent (60) becomes higher, carbon dioxide is more likely to be desorbed from the adsorbent (60), and as the temperature of the adsorbent (60) becomes lower, carbon dioxide is more likely to be adsorbed by the adsorbent (60). The "adsorption" as used herein includes not only adsorption of carbon dioxide onto a surface of a solid or liquid, but also absorption of carbon dioxide into a solid or liquid. Furthermore, the "adsorption" includes not only physical adsorption, but also chemical adsorption. The adsorbent (60) is constituted by a liquid film.

### (4) Recovery Unit

As illustrated in Fig. 1, the recovery unit (20) includes a recovery flow passage (21), a tank (22), a pump (23), and an opening/closing valve (24). An inflow end of the recovery flow passage (21) is connected to the casing (31). An inflow end of the recovery flow passage (21) communicates with the air flow path (AP). An outflow end of the recovery flow passage (21) is connected to the tank (22). The tank (22) stores therein recovered carbon dioxide. The pump (23) decompresses an inside of the casing (31) and transports carbon dioxide desorbed from the adsorption member (50). The opening/closing valve (24) is provided in the recovery flow passage (21) and opens and closes the recovery flow passage (21). The recovery unit (20) may include a damper that opens and closes the recovery flow passage (21) instead of the opening/closing valve (24).

### (5) Controller

As illustrated in Fig. 1, the controller (C) controls the refrigeration cycle device (10), the adsorption device (30), and the recovery unit (20). Specifically, the controller (C) controls opened/closed states of the first damper (36) and the second damper (37), ON/OFF states of the first fan (12) and the second fan (38), an ON/OFF state of the compressor (13), the number of revolutions of the compressor (13), the opening degree of the expansion valve (14), an ON/OFF state of the pump (23), and opened/closed states of the opening/closing valve (24). The controller (C) may control the number of revolutions of the first fan (12), the second fan (38), or the pump (23).

The controller (C) includes a microcomputer and a memory device that stores therein software for causing the microcomputer to operate.

### (6) Operation of Carbon Dioxide System

The carbon dioxide recovery system (1) performs an adsorption operation that is a first operation and a regeneration operation that is a second operation. The carbon dioxide recovery system (1) repeatedly performs the adsorption operation and the regeneration operation alternately every predetermined period of time.

### (6-1) Adsorption Operation

In the adsorption operation, the first damper (36) and the second damper (37) are in an opened state (the state indicated by the solid line in Fig. 1), and the opening/closing valve (24) is in a closed state. The compressor (13), the first fan (12), and the pump (23) are in a stopped state, and the second fan (38) is in an operating state. The refrigeration cycle device (10) does not perform a refrigeration cycle.

When the second fan (38) operates, outdoor air passes through the inflow duct (32) and the inflow port (34) in this order, and flows through the air flow path (AP) in the casing (31). The air in the air flow path (AP) flows through the through-holes (56) of the adsorption member (50). During this process, carbon dioxide in the air is adsorbed by the adsorbent (60). The air that has flowed out from the through-holes (56) and passed the adsorption unit (40) passes through the outflow port (35) and the outflow duct (33) in this order and is then discharged to an outside.

### (6-2) Regeneration Operation

In the regeneration operation, the first damper (36) and the second damper (37) are in a closed state (the state indicated by the broken line in Fig. 1), and the opening/closing valve (24) is in an opened state. The compressor (13), the first fan (12), and the pump (23) are in an operating state, and the second fan (38) is in a stopped state. The refrigeration cycle device (10) performs a refrigeration cycle in which the first heat exchanger (41) functions as a radiator (condenser) and the second heat exchanger (15) functions as an evaporator.

In the refrigerant circuit (11), the compressor (13) compresses a refrigerant and discharges the compressed refrigerant. The refrigerant discharged from the compressor (13) flows through the first heat exchanger (41). Specifically, in the first heat exchanger (41), the refrigerant in the first header collection tube (42) is distributed into the flat tubes (44). Heat of the refrigerant in the flat tubes (44) transfers to the adsorption portions (51). As a result, carbon dioxide adsorbed by the adsorbent (60) is desorbed. The refrigerant that has flowed through the flat tubes (44) and has been condensed merges in the second header collection tube (43) and is then decompressed by the expansion valve (14). The decompressed refrigerant absorbs heat from outdoor air in the second heat exchanger (15) and evaporates. The refrigerant that has evaporated is compressed again by the compressor (13).

When the pump (23) operates, the air flow path (AP) of the casing (31) is decompressed. When carbon dioxide is desorbed from the adsorption member (50), a carbon dioxide concentration in the air in the air flow path (AP) increases. Carbon dioxide thus concentrated flows through the recovery flow passage (21) and is recovered in the tank (22).

In the regeneration operation, the refrigeration cycle device (10) is configured to heat the adsorption member (50) in a range of 50°C or more and 70°C or less. Specifically, in the regeneration operation, the controller (C) adjusts a temperature of the refrigerant in the first heat exchanger (41) by controlling the number of revolutions of the compressor (13). In this process, the controller (C) may control the opening degree of the expansion valve (14).

### (7) Material of Adsorbent

The adsorbent (60) according to the present embodiment is made of a material including two components, namely an amine-based substance that adsorbs carbon dioxide and an ionic liquid or a material including three or more components including an amine-based substance and an ionic liquid. The amine-based substance is strictly an amine-based liquid. The amine-based liquid is polyethylenimine.

The amine-based liquid may be 3-aminopropyltriethoxysilane, 3-[2-(2-aminoethylamino)ethylamino]propyltrimethoxysilane, 3-(2-aminoethylamino)propyldimethoxymethylsilane, 3-(aminomethyl)benzylamine, 2-amino-2-methyl-1-propanol, 2-amino-2-methyl-1,3-propanediol, 2-amino-2-hydroxymethyl-1,3-propanediol, 2-hydroxyethyldimethylamine, 1-amino-2-propanol, 1-amino-2-butanol, tetraethylenepentamine, benzylamine, phenethylamine, p-methoxybenzylamine, m-xylylenediamine, o-xylylenediamine, monoethanolamine, diethylene glycolamine, dimethylaminoethanol, or the like.

Examples of the ionic liquid include 1-butyl-3-methylimidazolium hexafluorophosphate, 1-butyl-3-methylimidazolium nitrate, 1-butyl-3-methylimidazolium tetrafluoroborate, 1-ethyl-3-methylimidazolium dicyanamide, 1-butyl-3-methylimidazolium thiocyanate, 1-butyl-3-methylimidazolium methyl sulfate, 1-butyl-3-methylimidazolium trifluoromethanesulfonate, 1-butyl-3-methylimidazolium acetate, 1-ethyl-1-3-methyl1-imidazolium ethyl sulfate, 1-n-octyl-3-methylimidazolium hexafluorophosphate, 1-n-octyl-1-3-methylimidazolium tetrafluoroborate, 1-n-butyl-3-methylimidazolium nitrate, N-butylpyridinium tetrafluoroborate, and 1-butyl-3-methylimidazolium.

In a case where the adsorbent is constituted only by an amine-based liquid, the temperature needed to regenerate the adsorbent (60) is approximately 80°C to 100°C. In this case, the adsorption member (50) needs to be heated in a range of 80°C to 100°C. In a case where the temperature of the refrigerant of the first heat exchanger (41) is set in this temperature range or higher in the refrigeration cycle device (10), a coefficient of performance (COP) of the refrigeration cycle device (10) decreases.

On the other hand, the adsorbent (60) according to the present embodiment contains an ionic liquid in addition to an amine-based liquid. It is therefore possible to lower the temperature needed to regenerate the adsorbent (60) in the regeneration operation. The presence of the ionic liquid lowers C-N bond strength of carbamate/carbamic acid species. This makes it easier for carbon dioxide adsorbed by the adsorbent (60) to be desorbed. It is therefore possible to lower the temperature needed to regenerate the adsorbent (60).

A weight of the amine-based liquid and a weight of the ionic liquid of the adsorbent (60) are referred to as w1 and w2, respectively. In this case, a weight ratio (w2/w1) of the ionic liquid to the amine-based liquid is preferably 1/3 or less. In a case where the weight ratio of the ionic liquid is too high, the temperature needed to regenerate the adsorbent (60) is excessively low. Specifically, the temperature needed to regenerate the adsorbent (60) is less than 50°C. In this case, under a condition that a temperature of outdoor air is high, for example, during the summer, there is a possibility that the adsorbent (60) is naturally regenerated. Furthermore, there is a possibility that adsorption capability of the adsorbent (60) decreases and carbon dioxide in air cannot be sufficiently recovered.

On the other hand, according to the adsorbent (60) according to the present embodiment, the weight ratio (w2/w1) of the ionic liquid to the amine-based liquid is 1/3 or less. It is therefore possible to suppress occurrence of a situation where the temperature needed to regenerate the adsorbent (60) is less than 50°C. As a result, it is possible to suppress occurrence of a situation where the adsorbent (60) is naturally regenerated by outdoor air or the adsorption capability of the adsorbent (60) decreases.

The weight ratio (w2/w1) of the ionic liquid to the amine-based liquid is preferably 1/6 or more. In a case where the weight ratio of the ionic liquid is too low, the temperature needed to regenerate the adsorbent (60) cannot be sufficiently lowered. This causes an increase in energy needed to heat the adsorbent (60). In particular, the COP of the refrigeration cycle device (10) decreases.

On the other hand, according to the adsorbent (60) according to the present embodiment, the weight ratio (w2/w1) of the ionic liquid to the amine-based liquid is preferably 1/6 or more. This can lower the temperature needed to regenerate the adsorbent (60) to approximately 70°C or less. As a result, energy needed to regenerate the adsorbent (60) can be lowered, and the COP of the refrigeration cycle device (10) can be improved.

### (8) Features

(8-1)
The adsorption member (50) includes the base member (B) that has the plurality of holes (56) through which air flows and the adsorbent (60) that is carried on the base member (B) and adsorbs carbon dioxide in air. The adsorbent (60) contains an amine-based liquid and an ionic liquid.

According to this configuration, the temperature needed to regenerate the adsorbent (60) can be lowered due to the presence of the ionic liquid. As a result, energy needed to regenerate the adsorbent (60) can be lowered.

In a case where the regeneration temperature of the adsorbent (60) is high, the amine-based liquid is more likely to volatilize, and a lifetime of the adsorbent (60) is shortened. On the other hand, in a case where the regeneration temperature of the adsorbent (60) is low due to the presence of the ionic liquid, the amine-based liquid is less likely to volatilize. This prolongs the lifetime of the adsorbent (60), thereby reducing the frequency of replacement of the adsorbent (60).

(8-2)
The adsorbent (60) is configured such that the weight ratio of the ionic liquid to the amine-based substance is 1/3 or less. This can suppress occurrence of a situation where the temperature needed to regenerate the adsorbent (60) becomes excessively low, and it is therefore possible to suppress occurrence of a situation where carbon dioxide is naturally desorbed from the adsorbent (60) or the adsorption capability of the adsorbent (60) decreases.

(8-3)
The adsorbent (60) is configured such that the weight ratio of the ionic liquid to the amine-based substance is 1/6 or more. This can sufficiently lower the temperature needed to regenerate the adsorbent (60), thereby lowering energy needed for regeneration.

(8-4)
The carbon dioxide recovery system (1) includes a heating device that heats the adsorption member (50) in a range of 50°C or more and 70°C or less. The heating device is the refrigeration cycle device (10) that includes the compressor (13), the first heat exchanger (41) that is a radiator, the expansion valve (14) that is a decompression mechanism, and the second heat exchanger (15) that is an evaporator, and heats the adsorption member (50) by heat radiated from the first heat exchanger.

The presence of the ionic liquid allows the temperature needed to regenerate the adsorbent (60) to be in a range of 50°C or more and 70°C or less. Since the refrigeration cycle device (10) is configured to heat the adsorption member (50) in a range of 50°C or more and 70°C or less, carbon dioxide can be sufficiently desorbed from the adsorbent (60). Since the regeneration temperature of the adsorbent (60) is low, the COP of the refrigeration cycle device (10) can be improved.

(8-5)
The adsorption member (50) includes the base member (B) that has the plurality of holes (56) through which air flows and the adsorbent (60) carried on the base member (B). Therefore, in the adsorption member (50), a surface area where the adsorbent (60) is carried can be increased, and therefore the adsorption capability of the adsorption unit (40) can be increased.

In a case where the regeneration temperature of the adsorbent (60) is lowered due to the presence of the ionic liquid, there is a possibility that the adsorption capability of the adsorbent (60) decreases and carbon dioxide cannot be sufficiently adsorbed by the adsorbent (60). Such a decrease in adsorption capability can be suppressed by carrying the adsorbent (60) on the base member (B) having the plurality of holes (56).

### (9) Other Embodiments

The above embodiment may have the following configurations.

The carbon dioxide recovery system (1) need not be a DAC system that directly recovers carbon dioxide in atmosphere. For example, the carbon dioxide recovery system (1) may recover carbon dioxide in a mixture of air and industrial exhaust gas.

The heating device may be an electric heater or a heat source that uses waste heat. The heating device may be a hot water supplying device that supplies high-temperature water as a heat medium to the heat transfer tubes (the flat tubes (44)) of the adsorption unit (40). In other words, the carbon dioxide recovery system (1) need not use the refrigeration cycle device (10) as a heat source.

The decompression mechanism may be a capillary tube or a temperature-sensitive expansion valve.

The adsorption member (50) may adsorb carbon dioxide in indoor air instead of carbon dioxide in outdoor air. The adsorption member (50) may be, for example, applied to a ventilation device for indoor ventilation.

The adsorbent (60) may be carried throughout the base member (B).

The material of the base member (B) of the adsorption member (50) may be a metal. The base member (B) may be made of a porous material. In this case, pores in the porous material constitute holes through which air flows. The base member (B) may be made of metal fibers or carbon fibers. In this case, pores in the metal fibers or carbon fibers constitute holes through which air flows.

Although the embodiments and modifications have been described above, it will be understood that various changes in form and details may be made without departing from the spirit and scope of the claims. Further, the above embodiment, modifications, and other embodiments may be appropriately combined or substituted as long as the functions of the subject matter of the present disclosure are not impaired.

The expressions "first", "second", "third" and so on described above are used to distinguish terms to which these expressions are assigned, and do not limit the number or order of those terms.

### Industrial Applicability

As described above, the present disclosure is useful for an adsorption member and a carbon dioxide recovery system.

### Reference Signs List

- 1: carbon dioxide recovery system
- 10: refrigeration cycle device (heating device)
- 13: compressor
- 14: expansion valve (decompression mechanism)
- 15: second heat exchanger (evaporator)
- 41: first heat exchanger (radiator)
- 50: adsorption member
- 56: through-hole (hole)
- 60: adsorbent
- B: base member

## Claims

1. An adsorption member comprising:
a base member (B) having a plurality of holes (56) through which air flows; and
an adsorbent (60) that is carried on the base member (B) and adsorbs carbon dioxide in air, wherein
the adsorbent (60) contains an amine-based substance and an ionic liquid.

2. The adsorption member according to claim 1 or 2, wherein
a weight ratio of the ionic liquid to the amine-based substance is 1/3 or less.

3. The adsorption member according to claim 2, wherein
the weight ratio of the ionic liquid to the amine-based substance is 1/6 or more.

4. A carbon dioxide recovery system comprising the adsorption member according to any one of claims 1 to 3.

5. The carbon dioxide recovery system according to claim 4, further comprising a heating device (10) that heats the adsorption member (50) in a range of 50°C or more and 70°C or less.

6. The carbon dioxide recovery system according to claim 5, wherein
the heating device (10) is a refrigeration cycle device that includes a compressor (13), a radiator (41), a decompression mechanism (14), and an evaporator (15) and heats the adsorption member (50) by heat radiated from the radiator (41).
